## Europäisches Patentamt

## European Patent Office

## Office européen des brevets

(19)

(11) Veröffentlichungsnummer : **0 341 480 B1**

(12)

# EUROPÄISCHE PATENTSCHRIFT

(45) Veröffentlichungstag der Patentschrift :
**01.04.92 Patentblatt 92/14**

(51) Int. Cl.⁵ : **F01L 3/10**

(21) Anmeldenummer : **89107365.2**

(22) Anmeldetag : **24.04.89**

(54) **Montagevorrichtung für Ventilbetätigungselemente von Brennkraftmaschinen.**

(30) Priorität : **13.05.88 DE 3816321**
**04.03.89 DE 3907001**

(43) Veröffentlichungstag der Anmeldung :
**15.11.89 Patentblatt 89/46**

(45) Bekanntmachung des Hinweises auf die
Patenterteilung :
**01.04.92 Patentblatt 92/14**

(84) Benannte Vertragsstaaten :
**AT DE ES FR GB IT SE**

(56) Entgegenhaltungen :
**FR-A- 554 320**
**GB-A- 319 188**
**GB-A- 595 696**
**US-A- 2 855 915**

(73) Patentinhaber : **GOETZE AG**
**Bürgermeister-Schmidt-Strasse 17**
**W-5093 Burscheid 1 (DE)**

(72) Erfinder : **Deuring, Hans, Dipl.-Ing.**
**Im Eulenflug 29**
**W-5093 Burscheid (DE)**
Erfinder : **Maquire, James Hugh**
**Weissenstein 76b**
**W-4018 Langenfeld (DE)**
Erfinder : **Worsley, Roland**
**Jakobistrasse 7**
**W-5090 Leverkusen 3 (DE)**
Erfinder : **Whitehead, Martin J.**
**Medes Rising 19 Coombe Road**
**Otford Sevenoaks Kent, TN 145 RJ (GB)**

EP 0 341 480 B1

**Beschreibung**

Die Erfindung betrifft eine Montagevorrichtung für Ventilbetätigungselemente von Brennkraftmaschinen, bestehend aus mindestens einer einen Ventilschaft konzentrisch umschließenden Feder, die sich axial zwischen einen Ventilfederteller und gegebenenfalls zwischen einen Federsitzring erstreckt, segmentförmige Befestigungskeile, die in einer zentralen konischen Ausnehmung des Ventilfedertellers eingelegt sind, und einer Scheibe, die die Ausnehmung teilweise verschließt und die Befestigungskeile gegen Herausfallen sichert.

Die US-PS 2.855.915 offenbart eine Montagehilfe, die aus einer elastomeren Scheibe besteht. Diese Hilfseinrichtung ist mit dem Ventilfederteller derart verbunden, daß die in der konischen Ausnehmung des Ventilfedertellers eingelegten Befestigungskeile durch die elastomere Scheibe gegen Herausfallen gesichert sind. Beim Montieren des Ventilfedertellers in der Brennkraftmaschine werden die Befestigungskeile durch den Ventilschaft axial in Richtung der Scheibe verschoben, dabei vergrößert sich der lichte Durchmesser der Befestigungskeile soweit, daß der Ventilschaft zwischen den Befestigungskeilen axial durchgestreckt werden kann. Gleichzeitig wird über die elastomere Scheibe eine axiale Rückstellkraft auf die Befestigungskeile ausgeübt, so daß beim Erreichen der korrespondierenden Rille im Ventilschaft die Befestigungskeile in ihre ursprüngliche Position zurückbewegt werden und damit der Ventilfederteller gegenüber dem Ventilschaft axial fixiert wird.

Die Montagehilfe ist so konzipiert, daß sie nach der Montage mit dem Ventilfederteller verbunden innerhalb des Motors verbleibt und dann als Dichtkorper den Ventilschaft gegen Schmieröl abdichtet. Dies führt aber dazu, daß die bei modernen Motoren üblicherweise vorhandenen Ventilschaftabdichtungen nicht mehr genügend Schmieröl enthalten, so daß die Dichtlippen der Ventilschaftabdichtungen erhöhtem Verschleiß unterliegen. Ein weiterer Nachteil der vorhandenen Montagehilfe ist darin zu sehen, daß zur Befestigung des Ventilfedertellers lediglich Befestigungskeile mit nur einem radial gerichteten Vorsprung in Form eines umlaufenden Steges zur Arretierung in einer korrespondierenden Rille im Ventilschaft verwendet werden können.

Der Erfindung liegt die Aufgabe zugrunde, die vorbekannte Montagehilfe dahingehend zu verbessern, daß eine komplette Montage aller Ventilbetätigungselemente, das heißt sowohl des Ventilfedertellers mit den Befestigungskeilen als auch der Ventilfeder und gegebenenfalls eines unterhalb der Ventilfeder vorgesehenen Federsitzringes, in die Brennkraftmaschine möglich ist.

Diese Aufgabe wird erfindungsgemäß dadurch gelöst, daß am Außenumfang der Scheibe eine axiale Verlängerung derselben vorgesehen ist, die elastisch verformbar ist, und deren freies Ende mit dem axial dem Ventilfederteller entgegengesetzten Federende beziehungsweise dem Federsitzring lösbar verbunden ist. Auf diese Weise können mit nur einem Montagewerkzeug sämtliche Ventilbetätigungselemente in die Brennkraftmaschine montiert werden. Außer der damit wesentlich vereinfachten Endmontage werden auch Transport und Lagerung der Einzelteile wesentlich erleichtert.

Vorzugsweise besteht die axiale Verlängerung aus mindestens zwei diametral gegenüberliegenden Haltelappen. Alternativ besteht je nach den Raumverhältnissen in der Brennkraftmaschine und je nach den axialen Federspannkräften die Möglichkeit, die axiale Verlängerung auch als zylindrische Hülse auszubilden. Der freie Endbereich der Haltelappen beziehungsweise der Hülse weist eine Einschnürung und einen nach außen kegelförmig abgewinkelten Rand auf. Auf diese Weise ist ein automatischer Lösungsmechanismus geschaffen, der die Montagevorrichtung von den Ventilbetätigungselementen beim Einbau nach der Endpositionierung trennt.

Da bei vielen Motoren Befestigungskeile mit mehreren axial übereinander angeordneten umlaufenden Stegen zur Anwendung gelangen, weist einem weiteren Gedanken der Erfindung gemäß die Scheibe eine außerhalb der konischen Ausnehmung des Ventilfedertellers sich erstreckende Halterung zur Aufnahme der Befestigungskeile auf. Der Innendurchmesser der Halterung ist dabei derart bemessen, daß der lichte Durchmesser der Befestigungskeile vor der Montage in die Brennkraftmaschine gleich oder größer als der Ventilschaftdurchmesser ist. Auf diese Weise berühren sich während der Montage die Befestigungskeile und der Ventilschaft zunächst nicht, wodurch die Verwendung von Befestigungskeilen mit mehreren umlaufenden Stegen ermöglicht wird, ohne daß sich die Bauteile beim Einbau prozeßhindernd verhaken. Zur sicheren Fixierung der Befestigungskeile ist die Halterung als ein die Befestigungskeile übergreifendes Rohrteil ausgebildet, welches an den Endbereichen Axialanschläge aufweist. Zur Verbindung der Befestigungskeile mit dem Ventilschaft werden diese mittels eines Werkzeuges radial in Richtung des Ventilschaftes verschoben. Damit das Werkzeug die Befestigungskeile positionsgerecht verschieben kann, weist das Rohrteil im Bereich der Befestigungskeile Öffnungen auf, durch die das Werkzeug hindurchgreift. Um ein Durchgreifen des Werkzeuges zu ermöglichen, kann das Rohrteil auch durch axiale Einschnitte in mindestens zwei Segmente unterteilt sein.

Die Erfindung ist in der Zeichnung dargestellt und wird im folgenden näher erläutert. Es zeigen:

Figur 1 Ventilbetätigungselemente im eingebauten Zustand
Figur 2 Montagevorrichtung mit Ventilbetätigungselementen
Figur 3 Montagevorgang der Ventilbetätigungselemente
Figur 4 modifizierte Montagevorrichtung mit Halterung für Befestigungskeile

Figur 5 Montagevorrichtung mit modifizierter Halterung

Figur 6 Montagevorgang mit Montagevorrichtung (gemäß Figur 5) und Montagewerkzeug.

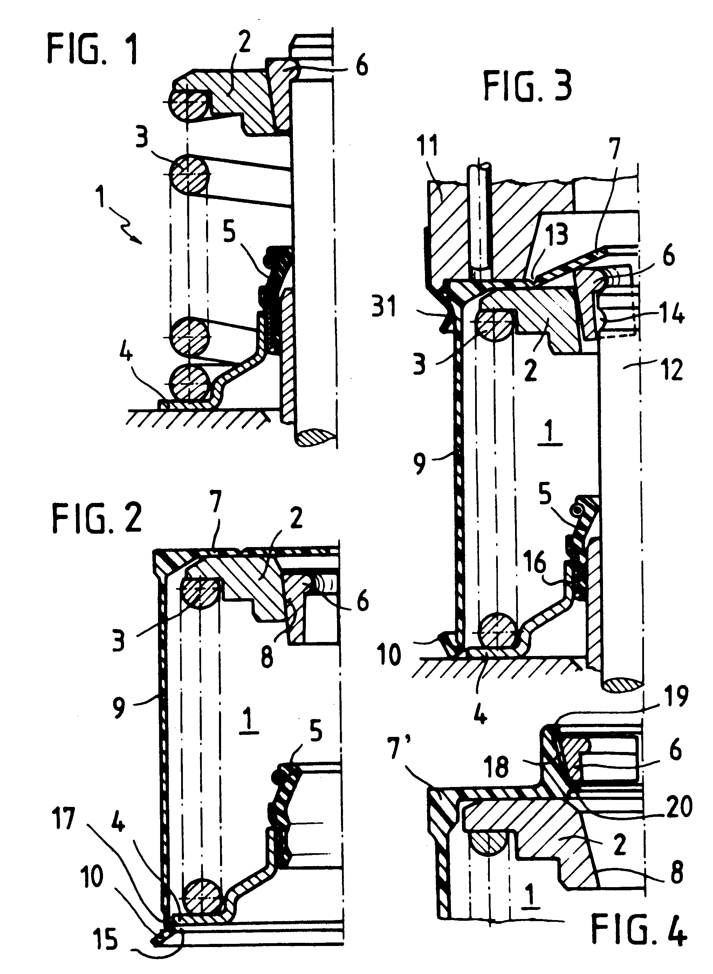

In der Figur 1 sind Ventilbetätigungselemente (1) dargestellt, die für eine Funktion eines Ventiles für moderne Brennkraftmaschinen notwendig sind. Sie setzen sich zusammen aus Ventilfederteller (2), Ventilfeder (3), Federsitzring (4), Ventilschaftabdichtung (5) sowie zwei halbschalenförmigen Befestigungskeilen (6).

In der Figur 2 ist eine erfindungsgemäße Montagevorrichtung mit den Ventilbetätigungselementen (1) vor dem Einbau dargestellt. Mittels einer Scheibe (7), welche den Stirnflächenbereich des Ventilfedertellers (2) abdeckt, werden die Befestigungskeile (6) innerhalb einer zentralen Ausnehmung (8) des Ventilfedertellers (2) gegen Herausfallen gesichert. Ein Herausfallen der Befestigungskeile (6) in entgegengesetzter Richtung wird durch die kegelige Querschnittsform der Befestigungskeile (6) in Verbindung mit der korrespondierenden Querschnittsform der Ausnehmung (8) verhindert.

Die Scheibe (7) weist eine axiale Verlängerung auf, die als zylindrische Hülse (9) ausgebildet ist. Der freie Endbereich (10) der Hülse (9) ist mit dem Federsitzring (4) nach Art einer Schnappverbindung (15) verbunden, darüber hinaus weist der Endbereich (10) einen sich kegelförmig nach außen erstreckenden, abgewickelten Rand auf.

Sämtliche Einzelteile sind axial zwischen der Schnappverbindung (15) und der Scheibe (7) verspannt, so daß eine komplette Einbaueinheit für einen Montageautomaten zur Verfügung steht.

Zum Einbau der Ventilbetätigungselemente (1) (Figur 3) in die Brennkraftmaschine drückt ein Werkzeug (11) die Einbaueinheit über einen Ventilschaft (12). In der Endlage wird der kegelförmig abgewinkelte Rand, bedingt durch eine Einschnürung (17) am Endbereich (10) der Hülse (9), nach außen geklappt, dabei löst sich die Schnappverbindung (15) vom Federsitzring (4). Durch weiteres axiales Belasten der Ventilbetätigungselemente (1) mittels des Werkzeuges (11) wird die Feder (t) gespannt. Die Befestigungskeile (6) verschieben sich zunächst relativ zum Ventilfederteller (2) in Richtung auf das Werkzeug (11).

Ermöglicht wird diese Relativbewegung durch eine federartige Ausbildung der Scheibe (7) im Bereich der Befestigungskeile (6). Vorzugsweise wird die axiale Federungsmöglichkeit der Scheibe (7) durch eine Querschnittsverjüngung (13) im Bereich des Ventilfedertellers (2) erzeugt. Die Feder (t) wird mittels des Werkzeuges (11) so weit zusammengedrückt, bis daß die Befestigungskeile (6) mit ihren Stegen in die Rille (14) des Ventilschaftes (12) eingreifen. Beim anschließenden Entlasten der Feder (t) sind alle Ventilbetätigungselemente (1) funktionsgerecht in der Brennkraftmaschine positioniert. Danach wird das Werkzeug (11) entfernt, wobei durch eine damit verbundene Haltevorrichtung (31) die Scheibe (7) mit Hülse (9) von den Ventilbetätigungselementen (1) abgezogen wird.

In der Figur 4 ist eine modifizierte Montagevorrichtung mit einer Halterung (18) für die Befestigungskeile (6) außerhalb des Ventilfedertellers (2) dargestellt.

Zur Aufnahme der Befestigungskeile (6) bereits vor dem Einbau der Ventilbetätigungselemente (1) in den Motor weist die Scheibe (7) eine in Richtung des Ventilfedertellers (2) konisch sich verjüngende, zentrale Halterung (18) auf. Die Befestigungskeile (6) sind über radial gerichtete Axialanschläge (19,20) gegen Herausfallen gesichert. Um das System prozeßfähig zu machen, muß beim Montieren der Ventilbetätigungselemente ein zusätzliches - nicht weiter dargestelltes - Werkzeug die Befestigungskeile (6) an der Stirnfläche angreifen und in die Ausnehmung (8) des Ventilfedertellers (2) axial verschieben.

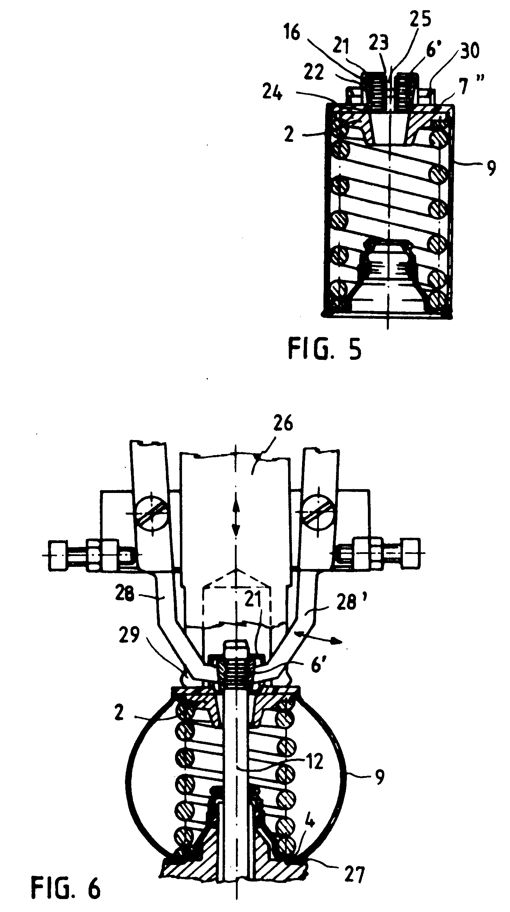

In der Figur 5 ist eine alternative Montagevorrichtung dargestellt, insbesondere für Befestigungskeile (6) mit mehreren axial übereinander angeordneten, umlaufenden Stegen (16). Die Scheibe (7″) weist eine Halterung (21) auf. Die Halterung (21) besteht aus einem die Befestigungskeile (6′) übergreifenden Rohrteil (22) mit an den Endbereichen angeordneten Axialanschlägen (23,24), die ein Herausfallen der Befestigungskeile während der Lagerung und des Transportes verhindern. Die Halterung (21) besteht aus einzelnen Segmenten, die durch axiale Einschnitte (25) im Rohrteil (22) gebildet sind. Der konstruktive Aufbau der axialen Verlängerung in Form einer Hülse (9) entspricht dem der Montagevorrichtung gemäß Figur 2.

In der Figur 6 ist der Montagevorgang dargestellt. Ein Werkzeug (26) preßt die Montagevorrichtung so weit über den Ventilschaft (12), bis der Ventilschaft beziehungsweise der zur Aufnahme der Befestigungskeile (6) vorgesehene Bereich des Ventilschaftes die Halterung (21) durchragt. In dieser Position wird gleichzeitig der abgewinkelte Rand (27) nach außen geklappt, die Hülse (9) beult sich radial nach außen und löst sich von dem Federsitzring (4).

Radial verstellbare Federarme (28,28′) des Werkzeuges (26) greifen durch die Einschnitte (25) (Figur 5) des Rohrteiles (22) und drücken die Befestigungskeile (6′) radial auf den Ventilschaft (12). Anschließend wird das Werkzeug (26) vom Ventilschaft (12) abgehoben. Hierdurch wird der Ventilfederteller (2) nach oben in Richtung der Befestigungskeile (6′) so weit verschoben, bis daß eine Verbindung des Ventilfedertellers (2) mit dem Ventilschaft (12) entsteht. Die bereits von dem Federsitzring (4) gelöste Montagevorrichtung wird durch eine Haltevorrichtung (29), die mit Halteteilen (30) (Figur 5) zusammenwirkt, abgezogen und kann zur Wiederverwendung mit neuen Bauteilen (Ventilbetätigungselementen) bestückt werden.

EP 0 341 480 B1

**Patentansprüche**

1. Montagevorrichtung für Ventilbetätigungselemente von Brennkraftmaschinen, bestehend aus mindestens einer einen Ventilschaft (12) konzentrisch umschließenden Feder (3), die sich axial zwischen einen Ventilfederteller (2) und gegebenenfalls zwischen einen Federsitzring (4) erstreckt, segmentförmige Befestigungskeile (6,6'), die in einer zentralen konischen Ausnehmung (8) des Ventilfedertellers (2) eingelegt sind, und einer Scheibe (7,7',7"), die die Ausnehmung teilweise verschließt und die Befestigungskeile (6,6') gegen Herausfallen sichert, dadurch gekennzeichnet, daß am Außenumfang der Scheibe (7,7',7") eine axiale Verlängerung derselben vorgesehen ist, die elastisch verformbar ist, und deren freies Ende mit dem axial dem Ventilfederteller (2) entgegengesetzten Federende beziehungsweise dem Federsitzring (4) lösbar verbunden ist.

2. Montagevorrichtung nach Anspruch 1, dadurch gekennzeichnet, daß die axiale Verlängerung aus mindestens zwei diametral gegenüberliegenden Halbschalen gebildet ist.

3. Montagevorrichtung nach Anspruch 1, dadurch gekennzeichnet, daß die axiale Verlängerung als zylindrische Hülse (9) ausgebildet ist.

4. Montagevorrichtung nach den Ansprüchen 1 bis 3, dadurch gekennzeichnet, daß der freie Endbereich der Hülse (9) eine Einschnürung (17) und einen nach außen kegelförmig abgewinkelten Rand aufweist.

5. Montagevorrichtung nach den Ansprüchen 1 bis 4, dadurch gekennzeichnet, daß die Scheibe (7',7") eine außerhalb der konischen Ausnehmung des Ventilfedertellers (2) sich erstreckende Halterung (18,21) zur Aufnahme der Befestigungskeile (6,6') aufweist, derart, daß der lichte Durchmesser der Befestigungskeile (6,6') gleich oder größer als der Ventilschaftdurchmesser (12) ist.

6. Montagevorrichtung nach den Ansprüchen 1 bis 5, dadurch gekennzeichnet, daß die Halterung (21) als ein die Befestigungskeile (6,6') übergreifendes Rohrteil (22) ausgebildet ist.

7. Montagevorrichtung nach den Ansprüchen 1 bis 6, dadurch gekennzeichnet, daß an den Endbereichen des Rohrteiles (22) Axialanschläge (23,24) angeordnet sind.

8. Montagevorrichtung nach den Ansprüchen 1 bis 7, dadurch gekennzeichnet, daß das Rohrteil (22) im Bereich der Befestigungskeile (6,6') Öffnungen aufweist.

9. Montagevorrichtung nach den Ansprüchen 1 bis 8, dadurch gekennzeichnet, daß das Rohrteil (22) durch axiale Einschnitte (25) in mindestens zwei Segmente unterteilt ist.

**Claims**

1. Assembly device for valve operating elements of internal combustion engines, consisting of at least one spring (3) concentrically surrounding a valve stem (12) and extending axially between a valve spring cap (2) and if desired a spring seating ring (4), segmental collets (6, 6') which are fitted in a central conical recess (8) in the valve spring cap (2), and a disc (7, 7', 7") which partially closes the recess and secures the collets (6, 6') against falling out, characterized in that an axial extension of the disc (7, 7', 7") is provided on its outer periphery, the extension being elastically deformable and its free end being releasably connected to the spring end opposite to the valve spring cap (2) or to the spring seating ring (4).

2. Assembly device according to claim 1, characterized in that the axial extension is formed from at least two diametrically opposed half shells.

3. Assembly device according to claim 1, characterized in that the axial extension is formed as a cylindrical sleeve (9).

4. Assembly device according to claims 1 to 3, characterized in that the free end region of the sleeve (9) has an indentation (17) and an outwardly coned margin.

5. Assembly device according to claims 1 to 4, characterized in that the disc (7', 7") has a retainer (18,21) for receiving the collets (6, 6') extending outside the conical recess of the valve spring cap (2), such that the clear diameter of the collets (6, 6') is equal to or greater than the valve stem diameter (12).

6. Assembly device according to claims 1 to 5, characterized in that the retainer (21) is formed as a tubular part (22) engaging over the collets (6, 6').

7. Assembly device according to claims 1 to 6, characterized in that axial stops (23, 24) are provided on the end regions of the tubular part (22).

8. Assembly device according to claims 1 to 7, characterized in that the tubular part (22) has openings in the region of the collets (6, 6').

9. Assembly device according to claims 1 to 8, characterized in that the tubular part (22) is divided into at least two segments by axial cuts (25).

4

## Revendications

1. Dispositif d'assemblage d'éléments d'actionnement de soupape pour moteurs à combustion interne constitué d'au moins un ressort (3) enveloppant de facon concentrique une tige (12) de soupape et qui s'étend axialement entre un siège (2) de ressort de soupape et, le cas échéant, un siège (2) de ressort de soupape, des clavettes (6,6') de fixation en forme de segments qui sont disposées dans un évidement conique cnetral et d'une plaque (7,7',7") qui ferme en partie l'évidement et empêche les clavettes (6,6') de fixation de tomber, caractérisé en ce qu'au bord extérieur de la plaque (7,7',7") est prévu un prolongement axial de cette dernière qui est déformable élastiquement et dont l'extrémité libre est assujettie de facon à pouvoir être séparée à l'extrémité du ressort opposé axialement au siège (2) de ressort de soupape, respectivement au support (4) annulaire du ressort.

2. Dispositif d'assemblage selon la revendication 1, caractérisé en ce que le prolongement axial est constitué par au moins deux demi-coquilles se faisant face de facon diamétralement opposée.

3. Dispositif d'assemblage selon la revendication 1, caractérisé en ce que le prolongement axial est constitué d'une chemise cylindrique.

4. Dispositif d'assemblage selon les rrvendications 1 à 3, caractérisé en ce que la zone d'extrémité libre de la chemise (9) présente un étranglement (17) et un bord recourbé vers l'extérieur de facon conique.

5. Dispositif d'assemblage selon les revendications 1 à 4, caractérisé en ce que la plaque (7,7') présente une attache (18,21) se prolongeant hors de l'évidement conique du siège (2) de ressort de soupape afin de recevoir les clavettes (6,6') de fixation de sorte que le diamètre libre des clavettes (6,6') de fixation est égal ou est plus grand que le diamètre (12) de la tige de soupape.

6. Dispositif d'assemblage selon les revendications 1 à 5, caractérisé en ce que l'attache (21) est constituée par un tuyau (22) recouvrant les clavettes (6,6') de fixation.

7. Dispositif d'assemblage selon les revendications 1 à 6, caractérisé en ce que des boutées (23,24) axiales sont disposées aux extrémités du tuyau (22).

8. Dispositif d'assemblage selon les revendications 1 à 7, caractérisé en ce que le tuyau (22) présente des ouvertures aux abords des clavettes (6,6') de fixation.

9. Dispositif d'assemblage selon les revendications 1 à 8, caractérisé en ce que le tuyau (22) est divisé par des entailles (25) axiales en au moins deux segments.

FIG. 1

FIG. 3

FIG. 2

FIG. 4

FIG. 5

FIG. 6